# EUROPEAN PATENT SPECIFICATION

(11) **EP 4 059 391 B1**
(45) Date of publication and mention of the grant of the patent: **08.04.2026**
(21) Application number: 20916205.6
(22) Date of filing: 12.10.2020
(51) Int. Cl.: A47J 42/10, A47J 42/38

(54) **GRINDING CORE STRUCTURE FOR BEAN GRINDER**
MAHLKERNSTRUKTUR FÜR BOHNENMAHLMASCHINE
STRUCTURE DE NOYAU DE BROYAGE POUR BROYEUR DE GRAINS

(30) Priority: 20.01.2020 CN 202020131549 U
(43) Date of publication of application: 21.09.2022
(73) Proprietor: Zhan, Huachun, Shanghai 201204 (CN)
(72) Inventor: LIU, Bin, Shanghai 201204 (CN); ZHAN, Huachun, Shanghai 201204 (CN)
(74) Representative: Díaz de Bustamante y Terminel, Isidro
(86) International application number: PCT/CN2020/120424
(87) International publication number: WO 2021/147379

(56) References cited:
- EP-A1- 2 138 591
- CN-U- 201 743 544
- CN-U- 202 234 916
- CN-U- 203 647 163
- CN-U- 203 647 163
- CN-U- 207 979 550
- CN-U- 209 018 459
- CN-U- 209 450 367
- CN-U- 211 582 758
- US-B1- 9 044 120
- US-B2- 7 604 192

## Description

### Field of the Invention

The present invention relates to the technical field of grinding devices, in particular to a grinding core structure for bean grinder.

### Background of the Invention

Bean grinders have been widely used, especially indispensable for production of coffee drinks, they are used to grind coffee beans into coffee powder. Coffee powder uniformity and fine powder content are the benchmark for evaluating the quality of bean grinders. Grinding core is an essential component of bean grinders, and frustum-shaped grinding core is widely used in various bean grinders. The work principle of bean grinders is as follows: both internal and external grinding cores have grinding teeth with certain inclination, so inclined grinding teeth can gradually deliver beans down. The more down the grinding cores, the smaller the gap between them and the grinder, and the greater the extrusion and cutting forces on beans, so beans are gradually ground into large crushed particles and further into small particles that meet the requirements.

Existing grinding cores have lower grinding efficiency, especially during manual grinding, it is time-consuming and laborious. Therefore, the present invention is proposed to improve existing grinding cores to increase grinding efficiency and uniformity of fine powder.

Document EP2138591A1 relates to the use of a treatment process on coffee mills.

Document US7604192B2 discloses a light weight, low cost grinder assembly for a pepper grinder that includes male and female rotary grinding members spaced to create between them a gap which determines the size of the ground pepper.

Document CN203647163U discloses a grinder and a grinding unit of the grinder.

### Summary of the Invention

The invention is defined by the appended claims.

In order to solve the above problems in the prior art, the present invention provides a grinding core structure of bean grinder, in which the first convex edges of the grinding core can quickly crushing beans at the beginning of grinding for subsequently grinding them into finer particles, and the second convex edges further grind crushed beans to improve grinding efficiency and uniformity of fine powder.

To solve the technical problems, the present invention adopts the technical scheme as follows:
A grinding core structure for bean grinder is provided, comprising a frustum-shaped grinding core body, characterized in that: a plurality of grinding teeth are evenly distributed on the periphery of the grinding core body in the longitudinal direction, at least one first convex edge is laterally arranged at the outer side of the upper section of the grinding teeth, and at least one second convex edge is longitudinally arranged at the outer side of the lower section of the grinding teeth. Beans are preliminarily crushed by the first convex edges and further ground by the second convex edges to improve grinding efficiency.

Further, the first convex edge is in the shape of a triangular prism, and one edge of the triangular prism faces the outside of the grinding core body. Beans are extruded by the sharp first convex edges, and more easily crushed in the early stage of grinding due to small force area.

Further, the second convex edge is in the shape of a triangular prism, and one edge of the triangular prism faces the outside of the grinding core body. The second convex edges further extrude and cut preliminarily crushed beans to improve grinding efficiency and quality.

Further, the grinding teeth gradually widen from top to bottom. The more down the grinding cores, the smaller the gap between them and the grinder, and the grinding core body extrudes and cuts beans thus to grind beans.

Further, the grinding teeth are arranged aslant relative to the axis of the grinding core body. The grinding grooves between the grinding teeth extrude fragments, and the second convex edges crush fragments until they are ground into powder. The inclined structure can increase contact area and improve grinding efficiency and quality.

Further, the second convex edges are arranged along the inclined direction of the grinding teeth. The inclined structure is more conducive to contacting beans and crushing them.

Further, the first convex edges are arranged parallel to the top surface of the grinding core body. They are used for preliminarily crushing beans into large fragments.

Further, a connecting hole is arranged at the central axis of the grinding core body. It is used for installing grinding cores.

Compared with the prior art, the beneficial effects of the present invention are: beans are crushed by the first convex edges into large fragments, and then extruded and crushed by the inclined grinding teeth and the second convex edges into smaller particles, producing fine powder with more uniform particle size.

### Brief Description of the Drawings

Other features, objects and advantages of the present invention will become more apparent by reading the detailed description of the non-limiting embodiments with reference to the following drawings.
Fig.1 is a structural schematic diagram of the present invention;
Fig.2 is a front view of the present invention;
Fig.3 is a top view of the present invention.

Description of the reference numerals: 1 - Grinding core body, 2 - Grinding tooth, 3 - Connecting hole, 4 - First convex edge, 5 - Second convex Edge

### Detailed Description of Preferred Embodiment

The present invention will be further described below with reference to the drawings and embodiment. In addition, it should be noted that, for the convenience of description, only the parts related to the present invention are illustrated in the drawings.

It should be noted that the embodiment of the present invention and the features of the embodiment may be combined with each other under the condition of no conflict. The present invention will be described in detail below with reference to the accompanying drawings and in conjunction with the embodiment thereof.

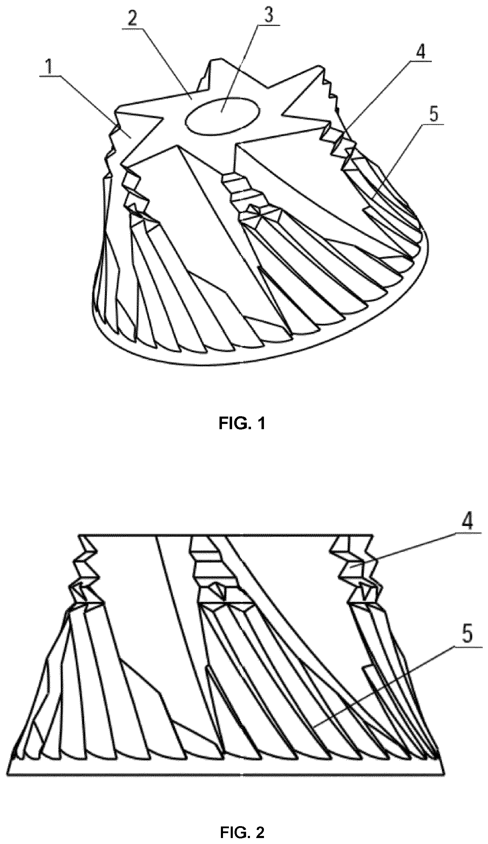

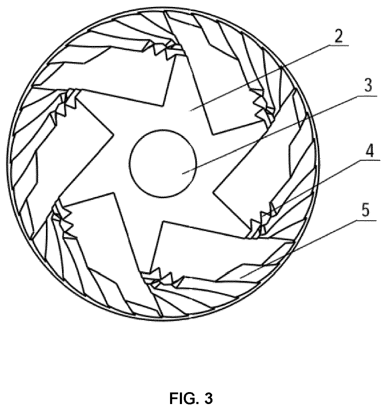

As shown in Figures 1-3, this embodiment provides a grinding core structure for of bean grinder, comprising the frustum-shaped grinding core body 1. The connecting hole 3 is arranged at the central axis of the grinding core body 1. A plurality of grinding teeth 2 are evenly distributed on the periphery of the grinding core body 1 in the longitudinal direction. The grinding teeth 2 gradually widen from top to bottom and are arranged aslant relative to the axis of the grinding core body 1. At least one first convex edge 4 is laterally arranged at the outer side of the upper section of the grinding teeth 2. The first convex edge 4 is in the shape of a triangular prism, and one edge of the triangular prism faces the outside of the grinding core body 1. The first convex edges 4 are arranged parallel to the top surface of the grinding core body 1. At least one second convex edge 5 is longitudinally arranged at the outer side of the lower section of the grinding teeth 2. The second convex edge 5 is in the shape of a triangular prism, and one edge of the triangular prism faces the outside of the grinding core body 1. The second convex edges 5 are arranged along the inclined direction of the grinding teeth 2.

During the process of grinding beans, the first convex edges 4 on the grinding teeth 2 extrude beans at the beginning, which can easily and quickly crush beans in the early stage of grinding due to small force area to transform whole beans into large fragments for subsequently grinding them into finer particles. The grooves between the grinding teeth 2 extrude beans and large fragments. The inclined second convex edges 5 cut beans and large fragments until required particles and more uniform fine powder are obtained.

## Claims

1. A grinding core structure for bean grinder, comprising a frustum-shaped grinding core body (1), comprising:
a plurality of grinding teeth (2) are evenly distributed on the periphery of the grinding core body (1) in the longitudinal direction;
at least one first convex edge (4) is laterally arranged at the outer side of the upper section of the grinding teeth (2); and
at least one second convex edge (5) is longitudinally arranged at the outer side of the lower section of the grinding teeth (2),
**characterized in that** said first convex edge (4) is in the shape of a triangular prism having a tangentially oriented edge that faces the outside of the grinding core body (1).

2. The grinding core structure for bean grinder according to claim 1, wherein the second convex edge (5) is in the shape of a triangular prism, and one edge of the triangular prism faces the outside of the grinding core body (1).

3. The grinding core structure for bean grinder according to claim 1, wherein the grinding teeth (2) gradually widen from top to bottom.

4. The grinding core structure for bean grinder according to claim 1, wherein the grinding teeth (2) are arranged aslant relative to the axis of the grinding core body (1).

5. The grinding core structure for bean grinder according to claim 4, wherein the second convex edges (5) are arranged along the inclined direction of the grinding teeth (2).

6. The grinding core structure for bean grinder according to claim 1, wherein the first convex edges (4) are arranged parallel to the top surface of the grinding core body (1).

7. The grinding core structure for bean grinder according to claim 1, wherein a connecting hole (3) is arranged at the central axis of the grinding core body (1).

## Patentansprüche

1. Die Mahlkernstruktur für eine Kaffeemühle gemäß Anspruch 1, **dadurch gekennzeichnet, dass** die erste konvexe Kante (4) die Form eines Dreiecksprismas hat und eine Kante des Dreiecksprismas zur Außenseite des Mahlkernkörpers (1) zeigt.

2. Die Mahlkernstruktur für eine Kaffeemühle gemäß Anspruch 1, **dadurch gekennzeichnet, dass** die zweite konvexe Kante (5) die Form eines Dreiecksprismas hat und eine Kante des Dreiecksprismas zur Außenseite des Mahlkernkörpers (1) zeigt.

3. Die Mahlkernstruktur für eine Kaffeemühle gemäß Anspruch 1, **dadurch gekennzeichnet, dass** sich die Mahlzähne (2) von oben nach unten allmählich verbreitern.

4. Die Mahlkernstruktur für eine Kaffeemühle gemäß Anspruch 1, **dadurch gekennzeichnet, dass** die Mahlzähne (2) schräg zur Achse des Mahlkernkörpers (1) angeordnet sind.

5. Die Mahlkernstruktur für eine Kaffeemühle gemäß Anspruch 5, **dadurch gekennzeichnet, dass** die zweiten konvexen Kanten (5) entlang der Neigungsrichtung der Mahlzähne (2) angeordnet sind.

6. Die Mahlkernstruktur für eine Kaffeemühle gemäß Anspruch 1, **dadurch gekennzeichnet, dass** die ersten konvexen Kanten (4) parallel zur Oberseite des Mahlkernkörpers (1) angeordnet sind.

7. Die Mahlkernstruktur für eine Kaffeemühle gemäß Anspruch 1, **dadurch gekennzeichnet, dass** ein Verbindungsloch (3) an der Mittelachse des Mahlkernkörpers (1) angeordnet ist.

## Revendications

1. Structure de noyau de broyage pour moulin à café selon la revendication 1, **caractérisée en ce que** le premier bord convexe (4) a la forme d'un prisme triangulaire, et qu'un bord du prisme triangulaire est tourné vers l'extérieur du corps du noyau de broyage (1).

2. Structure de broyage pour moulin à café selon la revendication 1, **caractérisée en ce que** le deuxième bord convexe (5) a la forme d'un prisme triangulaire, et qu'un bord du prisme triangulaire est tourné vers l'extérieur du corps de broyage (1).

3. Structure de broyage pour moulin à café selon la revendication 1, **caractérisée en ce que** les dents de broyage (2) s'élargissent progressivement du haut vers le bas.

4. Structure de broyage pour moulin à café selon la revendication 1, **caractérisée en ce que** les dents de broyage (2) sont disposées en biais par rapport à l'axe du corps de broyage (1).

5. Structure de broyage pour moulin à café selon la revendication 5, **caractérisée en ce que** les seconds bords convexes (5) sont disposés le long de la direction inclinée des dents de broyage (2).

6. Structure de broyage pour moulin à café selon la revendication 1, **caractérisée en ce que** les premiers bords convexes (4) sont disposés parallèlement à la surface supérieure du corps de broyage (1).

7. Structure de broyage pour moulin à café selon la revendication 1, **caractérisée en ce qu'**un trou de connexion (3) est disposé au niveau de l'axe central du corps de broyage (1).
